# EUROPÄISCHE PATENTSCHRIFT

(11) **EP 0 372 335 B1**
(45) Veröffentlichungstag und Bekanntmachung des Hinweises auf die Patenterteilung: **06.10.1993**
(21) Anmeldenummer: 89121820.8
(22) Anmeldetag: 25.11.1989
(51) Int. Cl.: C09C 1/22, C01G 49/00

(54) **Schwarzes Pigment, Verfahren zu seiner Herstellung sowie dessen Verwendung**
Black pigment, process for preparing it and its use
Pigment noir, procédé de préparation et utilisation

(30) Priorität: 08.12.1988 DE 3841313
(43) Veröffentlichungstag der Anmeldung: 13.06.1990
(73) Patentinhaber: BAYER AG, 51368 Leverkusen (DE)
(72) Erfinder: Buxbaum, Gunter, Dr., D-4150 Krefeld 1 (DE)

(56) Entgegenhaltungen:
- EP-A- 0 176 919
- US-A- 4 289 745
- CHEMICAL ABSTRACTS, vol. 107, no. 12, 21 September 1987 Columbus, Ohio, USA Seite 758; rechte Spalte; ref. no. 107926M; & JP-A-6291423
- BULLETIN OF THE CHEMICAL SOCIETY OF JAPAN. vol. 51, no. 1, 1978, TOKYO JP Seiten 134 - 138; M. KIYAMA: "The Formation of Manganese and Cobalt Ferrites by the Air Oxidation of Aqueous Suspensions and Their Properties"

## Beschreibung

Die vorliegende Erfindung betrifft ein tiefschwarzes, hitzestabiles im wesentlichen aus Manganferrit der allgemeinen Zusammensetzung Mn₁₊ₓFe₂₋ₓO₄ mit Spinellstruktur bestehendes Pigment mit x-Werten von -0,1 bis 0,1, Verfahren zur Herstellung dieses Pigmentes sowie dessen Verwendung.

In der Baustoffindustrie werden zunehmend durch Autoklavenbehandlung gehärtete Baustoffe eingesetzt. Kalksandsteine und Faserzement sind zwei Beispiele dafür. Diese Materialien werden nach dem Ausformen unter Druck üblicherweise bis 20 bar und Temperaturen bis 250°C gehärtet. Häufig angewendete Autoklavenbedingungen sind 205°C, 16 bar, 4 Stunden.

Mit Fe₃O₄-Schwarz eingefärbte Kalksandsteine verfarben sich unter diesen Bedingungen nach Rot. Seit einiger Zeit werden auch manganhaltige Eisenoxide als hitzebeständige Pigmente eingesetzt. Es handelt sich dabei um durch Glühung bei hohen Temperaturen hergestellte Mischphasen mit Bixbyit- oder Korund-Struktur.

Durch den zur Herstellung dieser Pigmente notwendigen Kalzinationsprozeß sind diese farbschwach und schwer zu dispergieren im Vergleich zu gefällten schwarzen Fe₃O₄-Pigmenten. Mn-haltige Mischphasenpigmente, wie z.B. Bayferrox 303 T® (Handelsprodukt der Fa. Bayer AG), behalten zwar ihren Farbton, sind aber farbschwach. So wird gegen ein farbstarkes Fe₃O₄-Pigment, z.B. Bayferrox 330® nur eine Farbstärke von 35 % erreicht. Das bedeutet, daß ca. die dreifache Pigmentmenge von Bayferrox 303 T® eingesetzt werden muß, um die gleiche Farbtiefe wie mit Bayferrox 330® zu erreichen.

Aufgabe dieser Erfindung ist es also, ein tiefschwarzes hitzestabiles Pigment zur Verfügung zu stellen, welches die beschriebenen Nachteile nicht aufweist.

Die vorbekannten Manganferriten weisen keine tiefschwarze Farbe auf. (US-A-4,289,745 und Bull. Chem. Soc. of JP, 51, 134-8 (1978))
Überraschenderweise wurde nun gefunden, daß diese Anforderungen durch schwarze, im wesentlichen aus Manganferrit der allgemeinen Zusammensetzung Mn₁₊ₓFe₂₋ₓO₄ mit Spinellstruktur bestehendes Pigment mit x-Werten von -0,1 bis 0,1 erfüllt werden. Gegenstand dieser Erfindung ist ein solches Pigment. Es handelt sich hierbei um ein tiefschwarzes hitzestabiles Pigment, das in der Spinellstruktur kristallisiert. Das steht im Gegensatz zur Lehre der DP-C 1767868, daß bei Mn-haltigen Mischoxiden die Spinellstruktur für Farbton und Farbstärke schädlich sein soll.

Pigmente im Sinne dieser Erfindung weisen Teilchendurchmesser von 0,1 - 1 µm auf.

Dieses erfindungsgemäße Pigment weist eine gute Beständigkeit gegen Wasserdampf und Luft bei erhöhtem Druck und erhöhter Temperatur auf.

Offensichtlich ist dieses Vorurteil nur für durch Glühung hergestellte Pigmente gültig. Die nach dem im folgenden beschriebenen Fällungsverfahren hergestellten erfindungsgemäßen Manganferrit-Pigmente sind farbstark, tiefschwarz, stabil und sehr gut dispergierbar.

Gegenstand dieser Erfindung ist auch ein Verfahren zur Herstellung dieser Pigmente. Diese Pigmente sind erhältlich, indem Eisen(II)salze und Mangan(II)salze in wässriger Lösung mit alkalisch reagierenden Stoffen in annähernd stöchiometrischem Verhältnis umgesetzt und anschließend bei erhöhter Temperatur oxidiert werden.

Das erfindungsgemäße Verfahren also so durchgeführt, daß
a) lösliche Mangan(II)salze und lösliche Eisen(II)salze mit alkalischen Fällungsmitteln in annähernd stöchiometrischem Verhältnis in wäßriger Lösung umgesetzt werden,
b) die Fällung mit einem Oxidationsmittel, vorzugsweise Luft, bei Temperaturen zwischen 80 C° und dem Siedepunkt, umgesetzt wird und
c) das Pigment filtriert, gewaschen, getrocknet und gemahlen wird, Wobei die Fällung mit dem alkalischen Fällungsmittel und gegebenenfalls das Aufheizen auf Oxidationstemperatur unter nichtoxidierenden Bedingungen durchgeführt wird.

Die Reaktionstemperaturen können zwischen 80°C und Siedetemperatur liegen, wobei aus ökonomischen Überlegungen der Bereich zwischen 80 und 95°C vorteilhaft ist, weil die Reaktionsgeschwindigkeit hoch genug und der Wärmeaustrag durch Wasserdampf tragbar ist.

Eine bevorzugte Ausführungsform des erfindungsgemäßen Verfahrens besteht also darin, daß die Oxidation bei Temperaturen zwischen 50°C und Siedepunkt, vorzugsweise zwischen 80 und 95°C, mit Luft durchgeführt wird.

Die Fällbedingungen sind nicht kritisch. Es kann sowohl bei Raumtemperatur als auch bei Reaktionstemperatur gefällt werden. Vorteilhaft ist aber das Aufheizen der FeSO₄/ MnSO₄-Lösung etwas unterhalb der vorgesehenen Reaktionstemperatur, um die bei der Alkali-Zugabe entstehende Neutralisationswärme zum weiteren Temperaturanstieg zu nutzen.

Zur Fällung können die üblicherweise benutzten Alkalihydroxide bevorzugt NaOH oder KOH, die Alkalicarbonate, insbesondere Na₂CO₃, aber auch Erdalkalihydroxide wie Mg(OH)₂, Ca(OH)₂ oder MgO oder CaO oder Gemische der genannten Verbindungen benutzt werden.

Zur Oxidation können kräftige Oxidationsmittel wie Nitrate oder Chlorate benutzt werden. Bevorzugt ist aber der Einsatz von Luft oder Sauerstoff.

Eine bevorzugte Ausführungsform des erfindungsgemäßen Verfahrens besteht darin, daß die Fällung mit dem alkalischen Fällungsmittel und gegebenenfalls das Aufheizen auf Oxidationstemperatur unter nichtoxidierenden Bedingungen durchgeführt wird.

In einer bevorzugten Ausführungsform werden Reste höhergeladener Fe- und/oder Mn-Ionen, die als Verunreinigungen zugegen sein können, durch Reduktion vorzugsweise an Eisenschrott beseitigt.

Der Gehalt der Metallsalzlösung an Fe(III) und Mn(III) wird also bevorzugt durch Reduktion, vorzugsweise an Eisenmetall, verringert.

Als Eisen- und Mangansalze können die Salze der starken Mineralsäuren, vorzugsweise die Chloride oder Sulfate, besonders bevorzugt aus Gründen der geringen Korrosivität die Sulfate verwendet werden. Hierbei sind insbesondere das als Abfallstoff bei der Titandioxidproduktion anfallende Grünsalz und das bei Oxidationen im Bereich der organischen Chemie, z.B. bei der Hydrochinonsynthese anfallende Mangansulfat, einsetzbar Verunreinigungen durch weitere spinellbildende Kationen im Bereich bis ca. 5 % sind nicht schädlich.

Eine besonders ökonomische Ausführungsform des erfindungsgemäßen Verfahrens besteht also darin, daß als Metallsalzquellen vorzugsweise Eisensulfat aus der TiO₂-Herstellung oder aus Beizereien und Mangansulfat aus Abfallsalzlösungen organischer Reaktionen eingesetzt werden.

Da höhere Gehalte an Fe(III) in der Lösung zu feinteiligen Produkten führen, ist zur Erzielung eines groben, blauschwarzen Pigmentes eine vorzeitige Oxidation der Lösung vor der Fällung zu vermeiden, was am besten durch Stickstoff-Beschleierung zu erreichen ist.

Die erhaltenen Pigmente werden in üblicher Weise abfiltriert, gewaschen und bei erhöhter Temperatur getrocknet

Nach der bei der Pigmentherstellung üblichen Mahlung, z.B. in Stift-Kugelschwing- oder Strahlmühlen, werden Prüfungen im Bindemittel F 48 entsprechend DIN 6174/ISO 7724, 1-3 drafts zur Ermittlung der Farbstärke und des Farbstichs durchgeführt und die CIELAB (C/2-grd)-Werte in den Beispielen mitgeteilt.

Zur weiteren Charakterisierung der Pigmente wird die spezifische Oberfläche nach BET (S_{BET}) in der Ausführungsform der Stickstoffmethode nach DIN 66131 herangezogen.

Gegenstand dieser Erfindung ist auch die Verwendung des erfindungsgemäßen schwarzen Pigmentes zur Einfärbung von Baustoffen.

Die Prüfung in autoklavierten Baustoffen erfolgt in Rezepturen, die bei H. Gundlach, "Dampfgehärtete Baustoffe", Wiesbaden-Berlin, 1973, S. 229 ff., ausführlich beschrieben sind. Die Härtungsbedingungen für Faserzementplatten sind entweder 180°C, 8 bar, 8 h oder 204°C, 16 bar, 4 h. Die Beurteilung der Platten erfolgt visuell.

Im folgenden soll anhand von Beispielen die Erfindung weiter erläutert werden, ohne sie jedoch einzuschränken.

### Beispiel 1

In einem mit Begasungsrührer versehenen 30 l-Rührbehälter wurden 12,2 l FeSO₄-Lösung mit 100 g FeSO₄/l und 676 g MnSO₄ x H₂O, gelöst in 6 l Wasser, vereinigt, mit Stickstoff begast und auf 85°C aufgeheizt. Dann wurden in 11 min 1569 ml Natronlauge mit 1017 g NaOH zugesetzt und bei Konstanthalten der Temperatur von 85°C 1 h mit 100 l/h Luft und 100 l/h N₂ und weiteren 4 h mit 400 l/h Luft und 100 l/h N₂ begast. Die schwarze Suspension von MnFe₂O₄ wurde auf Nutschen gewaschen und bei 60°C im Umluftschrank getrocknet. Die spez. Oberfläche wurde zu 7,1 m²/g bestimmt.

### Beispiel 2

Das getrocknete MnFe₂O₄-Pigment wurde verschiedenen Mahlungen in einer Kugelschwingmühle Typ Dismembrator® unterworfen:
a) 1 min mit Achatkugel
b) 20 sec mit Stahlkugel
c) 1 min mit Stahlkugel
d) 3 min mit Stahlkugel
Anschließend wurden die Farbstärken wie oben beschrieben in Alkyldallack F 48 gegen Bayferrox 303 T = 100 % bestimmt.

| CIELAB-Einheiten | | | | |
|---|---|---|---|---|
| | Farbstärke | Δa* | Δb* | Δc* |
| a | 252 % | 0,0 | 1,1 | -1,1 |
| b | 272 % | 0,0 | 1,2 | -1,2 |
| c | 303 % | 0,2 | 1,4 | -1,4 |
| d | 318 % | 0,3 | 1,6 | -1,6 |

Man erkennt eine deutliche Zunahme der Farbstärke mit der Mahlintensität und eine leichte, noch tolerable Gelbverschiebung des Farbtons.

### Beispiel 3

Der Ansatz wie in Beispiel 1 wurde nur auf 83°C aufgeheizt und mit der Natronlauge gefällt. Dabei stieg die Temperatur auf 86°C an. Diese Temperatur wurde konstant gehalten. Die Reaktion wurde nach 3,5 h beendet und nach dem beschriebenen Aufarbeiten wurden folgende Farbwerte ermittelt (Mahlung: 1 min, Achatkugel)

| Farbstärke | Δa* | Δb* |
|---|---|---|
| 218 % | -0,2 | -0,7 |

Das Produkt aus Beispiel 3 ist etwas farbschwächer als dasjenige aus Beispiel 2, aber blaustichiger.

### Beispiel 4

Wie in Beispiel 1 werden 1220 g FeSO₄ in 12,2 l und 709,8 g MnSO₄ x H₂O bei 85°C mit 1032 g NaOH in 1,59 l. Lauge gefällt und mit 400 l/h Luft und 100 l/h N₂ begast. Nach 5 h ist die Reaktion beendet. Folgende Farbwerte wurden nach dem üblichen Aufarbeiten bestimmt:

| Farbstärke | Δa* | Δb* |
|---|---|---|
| 175 % | -0,3 | 1,2 |

Die Zusammensetzung des Ferrits entspricht etwa der Formel Mn_{1,04}Fe_{1,96}O₄. Das Röntgenbeugungsdiagramm weist die reine Spinellphase aus.

### Beispiel 5

12,2 l Lösung mit 1,22 kg FeSO₄ wurden unter N₂ auf 80°C aufgeheizt und mit der bei 25°C hergestellten Fällung aus 676 g MnSO₄ x H₂O in 6 l Wasser und 1016 g NaOH 1,59 l Lösung unter N₂ versetzt. Nach dem weiteren Aufheizen auf 90°C wurde 4 h mit 400 l/h Luft und 100 l/h N₂ begast, Nach Filtrieren, Waschen und Trocknen bei 105°C wurden folgende Farbwerte bestimmt:

| Farbstärke | Δa* | Δb* |
|---|---|---|
| 270 % | 0,1 | 0,7 |

Die spez. Oberfläche wurde zu 6,7 m²/g ermittelt.

### Beispiel 6

Entsprechend Beispiel 1 wird die FeSO₄/MnSO₄-Lösung bei 75°C mit 1117 g NaOH in 1,69 l Lauge (d.h. 10 % Überschuß) gefällt und auf 80°C aufgeheizt. Dann wurde mit 400 l Luft/h und 100 l N₂ begast, in 13 min auf 90°C weiter aufgeheizt und die Reaktionsbedingungen noch 2,5 h gehalten. Nach Aufarbeitung und Trocknung bei 105°C wurden folgende Werte bestimmt:

| Farbstärke | Δa* | Δb* |
|---|---|---|
| 352 % | 1,0 | 3,0 |

### Beispiel 7

Es wurde wie in Beispiel 1 1220 g FeSO₄-Lösung und 676 g MnSO₄ x H₂O eingesetzt, jedoch die MnSO₄-Lösung 5 min mit 5 g Ferrum reductum unter N₂-Beschleierung gerührt. Danach konnte titrimetrisch kein Anteil höherwertiger Mn-Ionen mehr bestimmt werden. Die Fällung erfolgte bei 70°C. Anschließend wurde auf 90°C aufgeheizt und mit 400 l Luft/h und 100 l N₂/h 3,5 h begast. Die spez. Oberflächen wurden zu 4,8 m²/g bestimmt Ein Teil (A) wurde bei 125°C und (B) bei 40°C getrocknet.

Folgende Werte wurden gemessen:

| | Farbstärke | Δa* | Δb* |
|---|---|---|---|
| 7A | 176 % | -0,4 | 0,5 |
| 7B | 199 % | -0,4 | 0,3 |

Eine schonende Trocknung führt zu farbstarkem, etwas blaustichigem Pigment.

### Beispiel 8

Die Proben aus Beispiel 1 und 3 - 7 wurden 20 min in einer Scheibenschwingmühle mit Stahlringen gemahlen und zu Faserzementplatten verarbeitet. Nach der Autoklavierung bei 204°C, 16 bar, 4 h behielten alle Proben den schwarzen Farbton, während die als Vergleich mit präparierte, mit Fe₃O₄-pigmentierte Faserzementplatte rotbraun verfärbt war.

## Patentansprüche

1. Tief-Schwarzes, hitzestabiles im wesentlichen aus Manganferrit der allgemeinen Zusammen setzungen Mn₁₊ₓFe₂₋ₓO₄ mit Spinellstruktur bestehendes Pigment mit x-Werten von -0,1 bis +0,1.

2. Verfahren zur Herstellung eines im wesentlichen aus Manganferrit bestehenden Pigmentes gemäß Anspruch 1, dadurch gekennzeichnet, daß
a) lösliche Mangan(II)salze und lösliche Eisen(II)salze mit alkalischen Fällungsmitteln in annähernd stöchiometrischem Verhältnis in wäßriger Lösung umgesetzt werden.
b) die Fällung mit einem Oxidationsmittel, vorzugsweise Luft, bei Temperaturen zwischen 80 C° und dem Siedepunkt, umgesetzt wird und
c) das Pigment filtriert, gewaschen, getrocknet und gemahlen wird, wobei die Fällung mit dem alkalischen Fällungsmittel und gegebenenfalls das Aufheizen auf Oxidationstemperatur unter nichtoxidierenden Bedingungen durchgeführt wird.

3. Verfahren gemäß Anspruch 2, dadurch gekennzeichnet, daß der Gehalt der Metallsalzlösung an Fe(III) und Mn(III) durch Reduktion, vorzugsweise an Eisenmetall, verringert wird.

4. Verfahren gemäß einem der Ansprüche 2 oder 3, dadurch gekennzeichnet, daß als Metallsalzquellen vorzugsweise Eisensulfat aus der TiO₂-Herstellung oder aus Beizereien und Mangansulfat aus Abfallsalzlösungen organischer Reaktionen eingesetzt werden.

5. Verwendung des schwarzen Pigmentes gemäß einem oder mehreren der Ansprüche 1 bis 4 zur Einfärbung von Baustoffen.

## Claims

1. A deep black heat-stable pigment consisting substantially of spinel-type manganese ferrite with the general compositions Mn₁₊ₓFe₂₋ₓO₄ with values for x of -0.1 to +0.1.

2. A process for the production of the pigment consisting essentially of manganese ferrite claimed in claim 1, characterized in that
a) soluble manganese(II) salts and soluble iron(II) salts are reacted with alkaline precipitants in a substantially stoichiometric ratio in aqueous solution,
b) the precipitate is reacted with an oxidizing agent, preferably air, at temperatures of 80°C to the boiling point and
c) the pigment is filtered, washed, dried and ground, precipitation with the alkaline precipitant and, optionally, heating to the oxidation temperature being carried out under non-oxidizing conditions.

3. A process as claimed in claim 2, characterized in that the content of Fe(III) and Mn(III) in the metal salt solution is reduced by reduction, preferably on iron metal.

4. A process as claimed in claim 2 or 3, characterized in that iron sulfate from the production of TiO₂ or from pickling plants and manganese sulfate from waste salt solutions of organic reactions are preferably used as the metal salt sources.

5. The use of the black pigment claimed in one or more of claims 1 to 4 for colouring building materials.

## Revendications

1. Pigment noir intense, stable à chaud, constitué essentiellement de ferrite de manganèse de formule générale Mn₁₊ₓFe₂₋ₓO₄ à structure de spinelle, où x a une valeur dans l'intervalle allant de -0,1 à + 0,1.

2. Procédé de préparation d'un pigment essentiellement constitué de ferrite de manganèse selon la revendication 1, caractérisé en ce que
a) on fait réagir des sels solubles de manganèse (II) et des sels solubles de fer (II) avec des agents de précipitation alcalins en proportions approximativement stoechiométriques en solution aqueuse;
b) le précipité est mis en réaction avec un agent d'oxydation, de préférence l'air, à des températures comprises entre 80°C et le point d'ébullition;
c) le pigment est filtré, lavé, séché et moulu, la précipitation à l'aide de l'agent précipitant et, le cas échéant, le chauffage à température d'oxydation étant effectués dans des conditions non oxydantes.

3. Procédé selon la revendication 2, caractérisé en ce que la teneur de la solution de sel métallique en Fe (II) et Mn (III) est diminuée par réduction, de préférence en fer métallique.

4. Procédé selon l'une des revendications 2 et 3, caractérisé en ce que l'on met en oeuvre comme source de métal du sulfate de fer provenant de la préparation du FeO₂ ou d'installations de déc a page, et du sulfate de manganèse provenant de solutions résiduaires provenant de réactions organiques.

5. Utilisation du pigment noir selon une ou plusieurs des revendications 1 à 4, pour la mise en couleur de matériaux de construction.
